# EUROPEAN PATENT APPLICATION

(11) **EP 4 340 327 A1**
(43) Date of publication of application: **20.03.2024**
(21) Application number: 23195828.1
(22) Date of filing: 06.09.2023
(51) Int. Cl.: H04L 51/212, H04L 51/214, H04L 51/226, H04L 12/18

(54) **MESSAGING AMONG AGENTS IN A MESH NETWORK**

(30) Priority: 16.09.2022 US 202217933017
(71) Applicant: ITRON, INC., Liberty Lake, WA 99019 (US)
(72) Inventor: PARKKILA, Tommi Petteri, Liberty Lake, Washington, 99019 (US); ROCKEY, Matthew, Liberty Lake, Washington, 99019 (US)
(74) Representative: Finlayson, Scott Henry

(57) **Abstract**

Various embodiments disclosed herein provide techniques for messaging among agents executing on nodes a mesh network. In various embodiments, a method includes receiving, by a messaging application executing on a node of a mesh network, content for a message from an agent executing on the node; verifying, by the messaging application, that a policy permits delivery of the message; and transmitting, by the messaging application, the message to another messaging application executing on another node of the mesh network.

## Description

### Field of the Various Embodiments

The various embodiments relate generally to mesh networks and, more specifically, to messaging among agents in a mesh network.

### BACKGROUND

### Description of the Related Art

In mesh networks, one or more nodes communicate using one more communication media, such as various wired connections (e.g., Ethernet, power line communication (PLC), or the like) and/or wireless connections (e.g., WiFi^{®}, Bluetooth^{®}, radiofrequency (RF) communication, or the like). Many such mesh networks are self-organized as peer-to-peer networks, in which connections are established in response to the nodes discovering one another rather than based on a predefined topology or a centralized server.

Software on various nodes of a mesh network often communicate with one another to exchange messages. In some cases, the software on the various nodes exchanges messages generated by one or more agents executing on each node and/or delivers messages to one or more agents executing on each node.

### BRIEF DESCRIPTION OF THE DRAWINGS

So that the manner in which the features of the various embodiments can be understood in detail, a description of the inventive concepts may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1A illustrates an example of a computer system, according to various embodiments;
Figure 1B illustrates an example messaging flow diagram showing messaging among agents of a mesh network, according to various embodiments;
Figure 2 illustrates an example of messaging using the messaging applications of Figure 1, according to various embodiments;
Figure 3 illustrates a message queuing and sending process of the messaging application of Figure 2, according to various embodiments;
Figure 4 illustrates a message unqueuing process of the messaging application of Figure 2, according to various embodiments;
Figure 5 illustrates an example composite message generated by the message unqueuing process of Figure 4, according to various embodiments;
Figure 6 illustrates a message delivering process of the messaging application of Figure 2, according to various embodiments;
Figure 7 is a flow diagram of method steps for transmitting a message by a messaging application, according to various embodiments;
Figure 8 is a flow diagram of method steps for receiving a message by a messaging application, according to various embodiments;
Figure 9 illustrates an exemplary node that can be included in a mesh network, according to various embodiments; and
Figure 10 illustrates a network system configured to implement one or more aspects of the present embodiments.

### DETAILED DESCRIPTION

In the following description, numerous specific details are set forth to provide a more thorough understanding of the various embodiments. However, it will be apparent to one of skilled in the art that the inventive concepts may be practiced without one or more of these specific details.

In some mesh networks, nodes of the mesh network execute one or more agents, such as one or more software applications that provide various services. For example, in an infrastructure including power meters that are nodes in a mesh network and that measure power supplied to various consumers, agents executing on these power meters can measure power delivered by the power meter over a period and can communicate the information to other nodes for aggregation and transmission to a power utility or provider. The agents can gather information on behalf of various consumers (e.g., various subscribers consumers of power delivery services) and/or can collect, receive, and/or transmit various types of information (e.g., power consumption information and/or subscriber consumer information). In various embodiments, a given node can operate a communication interface that transmits data on behalf of the agents executing on the node and/or receives information from agents executing on other nodes. Further, the communication interface of one or more nodes can transmit data to and/or from the power utility or provider.

One challenge with these mesh networking scenarios is the distribution of the information. As a first example, a node can request delivery of a message including sensitive data, such as the identities of consumers and/or resource consumption information. If the communication interface were to broadcast the message to all other nodes of the mesh network, the message could be inadvertently transmitted to nodes and/or agents that should not have access to the sensitive information. That is, a broadcast message may be inappropriate for the transmission of various types of data or information. As a second example, an agent can request delivery of a message to other agents that are associated with different consumers. If the communication interfaces of the nodes transmit the message to the other nodes, communication can occur between agents that should not be permitted to communicate (e.g., the power meter at Consumer A's house receives billing information from Consumer B's power meter). As a third example, an agent can request delivery to a particular group of agents, such as all agents that are associated with the same entity (e.g., all agents that are associated with a particular utility company). In order to fulfill this request, the agent and/or communication interface might need to keep track of which other agents are part of the group. Tracking the membership of groups can require additional communication among the nodes. In various embodiments, the nodes communicate over communication media with limited bandwidth, and limiting the number of exchanged messages can conserve bandwidth that can be used for other messages. Further, in some embodiments, nodes operate using battery power, and the exchange of additional messages regarding group membership of agents can reduce the battery life of the nodes.

As discussed below, one solution to the above challenges is to execute a messaging application on each node of the mesh network. The messaging application executing on each node receives a message from an agent executing on the node; verifies that a policy permits delivery of the message; and transmits the message to another messaging application executing on another node of the mesh network.

Additionally, in various embodiments, the messaging application is operable to receive a message from an agent executing on the node; determine whether a policy permits delivery of the message; and, in response to determining that the policy permits delivery of the message, send the message to a messaging application of another node of the mesh network.

Moreover, in various embodiments, the messaging application is operable to accept a message from an agent executing on the node; certify that a policy authorizes content from the message to be provided to one or more other agents; and, in response to certifying that the policy authorizes the content from message to be provided to one or more other agents, provide the content from the message to another messaging application executing on another node of the mesh network.

Further embodiments provide, among other things, a system and a non-transitory computer-readable medium configured to implement one or more of the methods set forth above.

At least one technical advantage of the disclosed techniques is that, with the disclosed techniques, nodes are able to manage the transmission and receiving of messages between agents on the nodes based on agent-specific, data-specific, and/or communication media-specific criteria. The disclosed techniques further allow nodes to regulate the bandwidth used by the agents for transmitting messages, which reduces the bandwidth used for messaging and supports the prioritization of bandwidth among the various messages. Additionally, the improved management of the messaging reduces the power consumed for transmitting, receiving, and processing messages.

### Messaging Applications

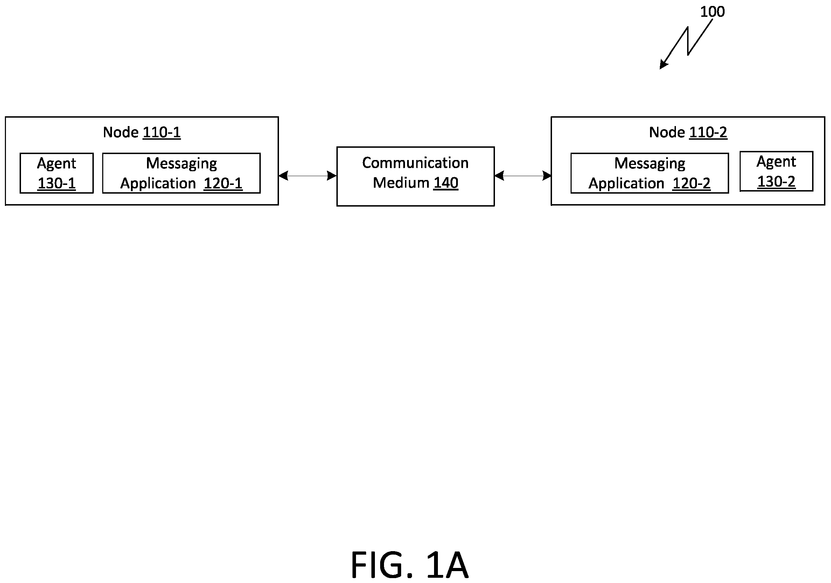

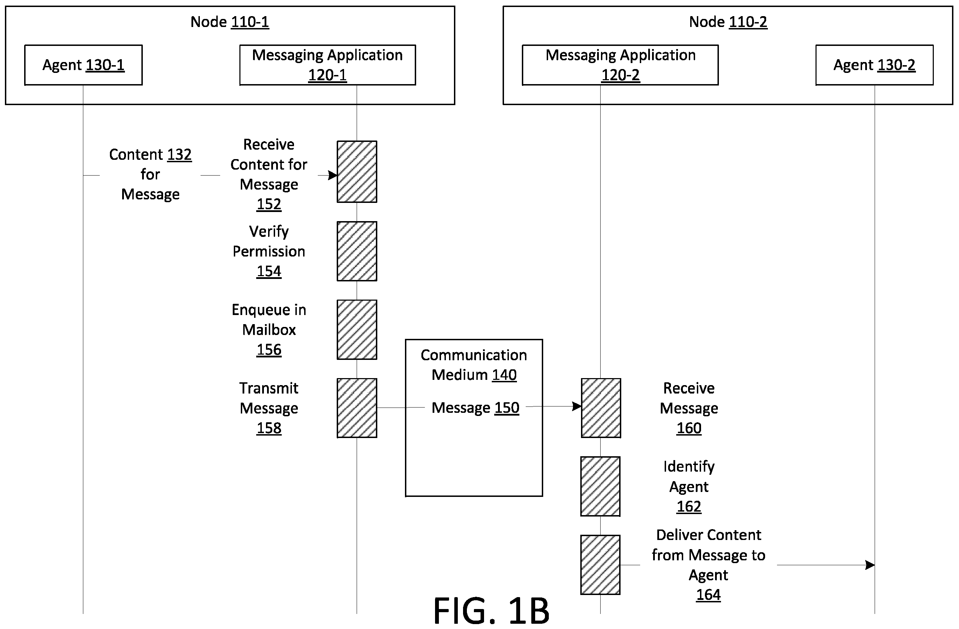

Figure 1A illustrates an example of a computer system 100, according to various embodiments. As shown in Figure 1A, computer system 100 includes, without limitation a node 110-1 and a node 110-2 coupled together via a communication medium 140. As discussed in additional detail in reference to Figures 1B and 1C, in various embodiments node 110-1 and node 110-2 are nodes of a mesh network that are operable to communicate with each other and with other nodes in the mesh network via communication medium 140. Node 110-1 includes, without limitation, an agent 130-1 and a messaging application 120-1. Node 110-2 includes, without limitation, an agent 130-2 and a messaging application 120-2. According to the techniques discussed in greater detail below in Figures 1A-9, Agent 130-1 uses messaging application 120-1 to send messages to and receive messages from other agents operating on other nodes of computing system 100, such as agent 130-2. Similarly, agent 130-2 uses messaging application 120-1 to send messages to and receive messages from agents operating on other nodes of computing system 100, such as agent 130-1. The various messaging applications 120 transmit the messages to the messaging applications 120 on other nodes 110 in computing system 100 using communication medium 140.

Figure 1B illustrates an example messaging flow diagram showing messaging among agents of a mesh network, according to various embodiments. Although the interactions between the two nodes are shown in an order, persons skilled in the art will understand that the interactions may be performed in a different order, interactions may be repeated or skipped, and/or may be performed by components other than those described in Figure 1B.

As shown in Figure 1B, a first node 110-1 and a second node 110-2 of a mesh network are connected by communication medium 140. The communication medium 140 can be, for example, a wired connection (e.g., an Ethernet connection or a power line communication connection) or a wireless connection (e.g., a WiFi^{®} connection or a Bluetooth^{®} connection). Although not shown, the first node 110-1 and the second node 110-2 can be in communication with other nodes of the mesh network by the same communication medium 140 or different communication media. The first node 110-1 executes an agent 130-1, and the second node 110-2 executes an agent 130-2. The agents 130-1, 130-2 perform functions such as (without limitation) monitoring, analyzing, collecting, storing, transmitting, and/or receiving data. Also, the first node 110-1 executes a messaging application 120-1, and the second node 110-2 executes a messaging application 120-2. The messaging applications 120-1, 120-2 enable the first node 110-1 and the second node 110-2 to exchange messages 150 with each other and, optionally, with other nodes of the mesh network.

Messaging application 120-1 performs an operation 152 of receiving (e.g., obtaining and/or accepting) content 132 for a message from the agent 130-1 executing on the first node 110-1. In various embodiments, the content 132 for the message includes data of a particular type of data (e.g., client identifying data, power subscription data, power usage data, or the like). In various embodiments, messaging application 120-1 receives the content 132 for the message via a message buffer or queue into which the agent 130-1 stores the content 132 for the message. Alternatively or additionally, in various embodiments, messaging application 120-1 receives the content 132 for the message via a call to an application programming interface (API) of the messaging application 120-1 by agent 130-1.

In various embodiments, the content 132 for the message is associated with one or more message groups. For example, the content 132 for the message can be received along with an identifier of one or more message groups, such as a name, a uniform resource identifier (URI), a universally unique identifier (UUID), or the like. Alternatively or additionally, in various embodiments, the content 132 for the message is associated with one or more message groups, such as a particular type of data that is intended to be delivered to a particular message group. Alternatively or additionally, in various embodiments, the content 132 for the message is received from an agent 130 that is for one or more message groups, and the messaging application 120-1 determines that the content 132 for the message is intended for other agents that are included in at least one of the one or more message groups. In various embodiments, if the content 132 for the message is for a message group, the messaging application encrypts the content 132 for the message with a cryptographic key that is associated with the message groups. Alternatively or additionally, the content 132 for the message might not be for any message group. In this case, the messaging application encrypts the content 132 for the message with a default cryptographic key that is not associated with any message group.

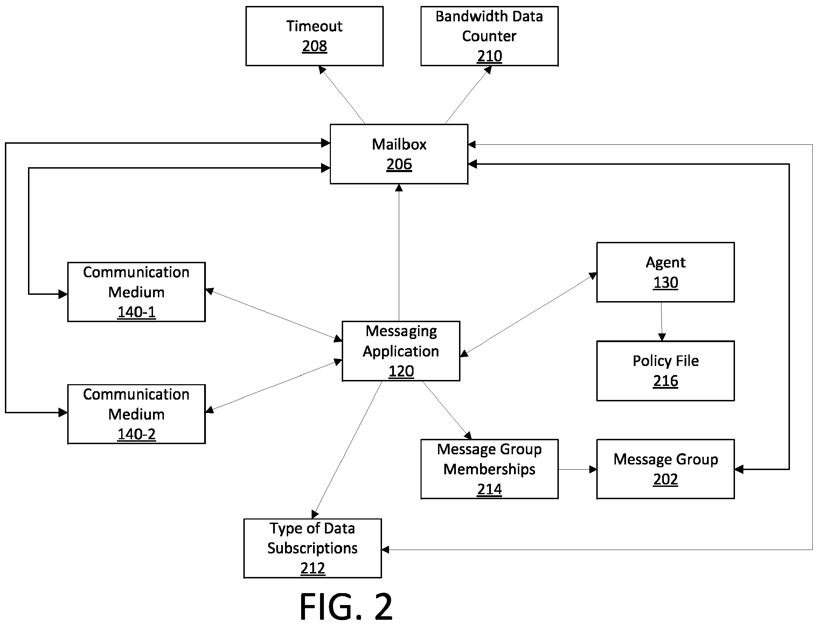

Messaging application 120-1 performs an operation 154 of verifying (e.g., certifying) a permission of the agent 130-1 to deliver the content 132 for the message. In various embodiments, the operation 154 includes determining whether the policy (e.g., a policy file 216 discussed herein in reference to Figure 2) permits the agent 130-1 to send the content 132 for the message to the message group. In various embodiments, the operation 154 includes determining whether the policy permits delivery of the content 132 for the message to a recipient that is associated with the content 132 for the message (e.g., to a particular message group and/or a member of the message group with which the content 132 for the message is associated). In various embodiments, the operation 154 includes determining whether the policy permits transmission of the data received from the agent 130-1 within a limit of transmitted data (e.g., a data transmission quota that is applied to the agent and/or to a message group). In various embodiments, the operation 154 include determining whether the policy permits transmission of the type of the data within a limit of transmitted data (e.g., a data transmission quota that is applied to the type of data). In various embodiments, the operation 154 includes determining whether the policy permits transmission of the data over a type of communication medium. In various embodiments, if messaging application 120-1 determines that agent 130-1 is not permitted to deliver the content 132 for the message, messaging application 120-1 refrains from transmitting the content 132 for the message. Messaging application 120-1 can reject and/or delete the content 132 for the message in response to determining that agent 130-1 is not permitted to deliver the content 132 for the message. The policy is discussed in further detail herein in reference to Figures 2, 3, and 9.

In response to verifying that the policy permits delivery of the content 132 for the message, messaging application 120-1 performs an operation 156 of enqueuing a message 150 that includes the content 132 in the mailbox. In various embodiments, messaging application 120-1 enqueues the message 150 in the mailbox based on a priority associated with the message (e.g., a high priority, a medium priority, or a low priority). In various embodiments, messaging application 120-1 enqueues the message 150 based on a delivery mode (e.g., an immediate delivery mode, in which the message 150 is sent as soon as possible, or a scheduled delivery mode, in which the message 150 is sent at a scheduled date and/or time). In various embodiments, the scheduled date and/or time is based on a start of an instance of a time period associated with the mailbox. For example, messaging application 120-1 can unqueue and transmit messages 150 from the mailbox once each hour, and the scheduled date and/or time can correspond to a start of the next hour.

Messaging application 120-1 performs an operation 158 of transmitting (e.g., sending and/or forwarding) the message 150 stored in the mailbox to messaging application 120-2 via a communication medium 140. In various embodiments, messaging application 120-1 transmits the message 150 with other messages that are stored in the mailbox. In various embodiments, messaging application 120-1 transmits the message 150 as soon as possible, based on an immediate delivery mode, or at a particular time, based on a scheduled delivery mode. In various embodiments, messaging application 120-1 transmits the message 150 based on a priority associated with the message (e.g., transmitting a first message 150 with a high priority before transmitting a second message 150 with a low priority).

Messaging application 120-2 performs an operation 160 of receiving the message 150 transmitted by messaging application 120-1 via the communication medium 140. In various embodiments, messaging application 120-2 retrieves the message 150 from a message buffer or queue that is associated with the communication medium 140 (e.g., an incoming message buffer or queue). In various embodiments, messaging application 120-2 receives the message 150 via a call to an application programming interface (API) of the messaging application by a communication adapter associated with the communication medium 140. In various embodiments, messaging application 120-2 decrypts the message 150 with a cryptographic key that is associated with a message group associated with the message 150, or with a default cryptographic key.

Messaging application 120-2 performs an operation 162 of identifying an agent 130 that is executing on node 110-2 and that is associated with the message 150. That is, messaging application 120-2 identifies agent 130-2 as being included in the message group associated with the message 150. In various embodiments, the message 150 includes an identifier of the message group, and messaging application 120-2 identifies agent 130-2 as being associated with the identifier of the message group. In various embodiments, the message 150 includes an identifier of a recipient, and messaging application 120-2 identifies agent 130-2 as being the recipient or as being associated with the recipient indicated by the identifier. In various embodiments, the message 150 includes data of a type, and messaging application 120-2 identifies agent 130-2 as being associated with the type of the data.

Messaging application 120-2 performs an operation 164 of delivering the content from the message 150 to agent 130-2. In various embodiments, messaging application 120-2 stores the message in a message buffer or queue that is associated with agent 130-2. In various embodiments, messaging application 120-2 stores the message 150 in a message buffer or queue and then notifies agent 130-2 that the message 150 has been received. In this manner, messaging applications 120-1, 120-2 enable messaging among the agents 130 of the mesh network.

Figure 2 illustrates an example of messaging using the messaging applications of Figures 1A and 1B, according to various embodiments. As shown, the messaging application 120 is coupled to a network via a plurality of communication media 140-1, 140-2 and to a plurality of agents 130. As further shown, the messaging application 120 has access to a mailbox 206, a set of type of data subscriptions 212, and a set of message group memberships 214 to a message group 202. The messaging application 120 can be included in node 110-1 and/or node 110-2 of Figures 1A and 1B. The messaging application 120 can be messaging application 120-1 and/or messaging application 120-2 of Figures 1A and 1B.

As shown, the messaging application 120 communicates with an agent 130. In various embodiments, the agent 130 is an application executing on the same node as the messaging application 120. The agent 130 can send messages to the messaging application 120 and receive messages from the messaging application 120. A message can include a request by the agent 130 to publish data to the message group 202 and can identify the agent 130 initiating the request. Alternatively or additionally, a message can include a request from the agent 130 to subscribe to receive messages that include a particular type of data. Alternatively or additionally, a message can include a request from the agent 130 to join the message group 202.

As shown, the policy is indicated by a policy file 216 that is associated with the agent 130. In various embodiments, the policy file 216 includes one or more rules by which the policy file restricts the delivery of messages from the agent 130 to the mesh network and/or associations between the agent 130 and/or the message group 202. Each rule of the policy file 216 includes a permission (e.g., an action that is permitted) that is granted based on a fulfillment of one or more criteria (e.g., a condition that, when fulfilled, grants the permission). As an example, the policy file 216 can include a rule indicating one or more actions that are permitted for the agent 130 and/or the message group 202. Alternatively or additionally, the policy file 216 can include a rule indicating one or more actions that are restricted when requested by the agent 130 and/or in relation to the message group 202. For example, the policy file 216 can include a rule indicating whether the agent 130 is permitted to send messages 150 (e.g., an identity or identifier of the agent 130 that is permitted to send messages 150) to one or more message groups. The policy file 216 can include a rule indicating whether the agent 130 can deliver messages 150 that include a particular type of data. The policy file 216 can include a rule indicating whether the agent 130 can deliver messages that to a recipient (e.g., a member of the message group 202 with which the message 150 is associated). The policy file 216 can include a rule indicating a limit of transmitted data that is associated with the agent 130 (e.g., a data transmission quota that is applied to the agent 130) and/or with one or more message groups. The policy file 216 can include a rule indicating a limit of transmitted data that is associated with a type of data that is included in messages 150 from the agent 130 (e.g., a data transmission quota that is applied to a type of data that is included in message 150 from the agent 130). The policy file 216 can include a rule indicating a type of communication medium over which messages 150 from the agent 130 can be transmitted.

In response to receiving a request from the agent 130 to join the message group 202, the messaging application 120 determines whether the policy file 216 permits the agent 130 to join the message group 202. If the policy file 216 permits the agent 130 to join the message group 202, the messaging application 120 adds the agent 130 to the message group 202 (e.g., by adding the agent 130 to a message group membership 214). If the policy file 216 indicates that the agent 130 is not permitted to join the message group 202, the messaging application 120 refrains from adding the agent 130 to the message group 202. The messaging application 120 returns a response indicating that the agent 130 cannot join the message group 202, optionally in response to a query by the agent 130 as to the status of the request to join the message group 202.

In response to receiving a request from the agent 130 to receive messages 150 that includes a particular type of data, the messaging application 120 determines whether the policy file 216 permits the agent 130 to receive messages 150 that include the particular type of data. In various embodiments, the particular type of data is identified by one or of more of data being associated with a specific feature (e.g., data related to a specific function such as power consumption information and/or like) and/or content of the data (e.g., text, images, video and/or audio recordings, executable files, cryptographic keys, software objects such as databases, compressed and/or encrypted data, or the like). If the policy file 216 permits the agent 130 to receive messages 150 that include the particular type of data, the messaging application 120 adds the agent 130 to the type of data subscriptions 212. If the policy file 216 indicates that the agent 130 is not permitted to receive messages 150 that include the particular type of data, the messaging application 120 refrains from adding the agent 130 to the type of data subscriptions 212. The messaging application 120 returns a response indicating that the agent 130 cannot receive messages 150 that include the particular type of data, optionally in response to a query by the agent 130 as to the status of the request to receive messages 150 that include the particular type of data.

In response to receiving a message 150 from the agent 130 to be sent to other agents 130 executing on the same node 110 or other nodes 110 of the mesh network, messaging application 120 determines whether the agent 130 is permitted to send the message 150. For example, the message 150 can be for the message group 202, and/or can include a particular type of data. The If the policy file 216 indicates that the agent 130 is permitted to send the message 150, the messaging application 120 fulfills the request. For example, the messaging application 120 can transmit the message 150 or enqueue the message 150 in the mailbox 206 for later delivery. If the policy file 216 indicates that the agent 130 is not permitted to send the message 150, the messaging application 120 refrains from sending the message 150. The messaging application 120 returns a response indicating that the message 150 cannot be sent, optionally in response to a query by the agent 130 as to the status of the request to send the message 150. The messaging application 120 deletes the message 150 in response to determining that the policy does not permit the agent 130 to send the message 150.

As shown, the messaging application 120 is associated with a mailbox 206. The mailbox 206 is associated with the message group 202. Alternatively or additionally, the mailbox 206 is associated with a type of data indicated by the type of data subscriptions 212. In various embodiments, when the messaging application 120 determines that the policy file 216 permits the agent 130 to deliver a particular message 150, the messaging application 120 enqueues the message in a queue of the mailbox 206. For example, the messaging application 120 can determine that the message 150 is for a particular message group 202 and can enqueue the message in a queue of the mailbox 206. As another example, the messaging application 120 can determine that the message 150 includes a particular type of data and can enqueue the message in a queue of the mailbox 206 due to an association between the mailbox 206 and the particular type of data.

In various embodiments, the mailbox 206 is associated with a time period with which messages are sent to other nodes of the mesh network (e.g., a time period of one hour). At the start of an instance of the time period (e.g., at the start of the next hour), the mailbox 206 initiates a timeout 208 using a timer so that an alert is raised at the start of the next instance of the time period. During an instance of the time period for a mailbox, the messaging application 120 enqueues received messages in the queue of the mailbox. At the conclusion of the timeout 208 (corresponding to a start of a next instance of the time period), the mailbox 206 unqueues the queued messages and transmit the unqueued messages to the messaging application 120 of other nodes of the mesh network.

In various embodiments and as shown, the mailbox 206 is associated with a bandwidth counter 210. The bandwidth counter 210 counts the bandwidth of data transmitted from the mailbox within each instance of a time period. While the bandwidth counter 210 for the mailbox 206 remains below a data transmission bandwidth limit (e.g., a limit in the amount of data that can be transmitted in the time period), the mailbox 206 can transmit the messages. If the bandwidth counter 210 for the mailbox 206 exceeds a data transmission limit, the mailbox 206 refrains from sending further messages until a start of a next instance of the time period and a new cycle of the timeout 208.

In various embodiments and as shown, the messaging application 120 is coupled to a first communication medium 140-1, which can include a wired connection (e.g., Ethernet, power line communication (PLC), or the like) and/or a wireless connection (e.g., WiFi^{®}, Bluetooth^{®}, radiofrequency (RF) communication, or the like). The messaging application 120 is also coupled to a second communication medium 140-2, which can be a same or similar type as the first communication medium 140-1 or a different type. In various embodiments, each communication medium 140-1, 140-2 couples the messaging application 120 and the node executing the messaging application 120 to one other node that is also executing a messaging application 120 or to a plurality of nodes that are each executing a messaging application 120. In various embodiments, at least one of the communication media 140-1, 140-2 connects the messaging application 120 and the node executing the messaging application 120 to a device or system that is external to the mesh network, such as a power utility or a wide-area network (WAN) (e.g., the Internet).

In various embodiments and as shown, the mailbox 206 is associated with one or more of the communication media 140-1, 140-2. The messaging application 120 transmits messages enqueued in the mailbox 206 via at least one of the one or more communication medium 140-1, 140-2 that is associated with the mailbox 206.

As shown, the messaging application 120 can also receive messages from the messaging application of other nodes of the mesh network via each of the communication media 140-1, 140-2. In various embodiments, each received message can be for a message group 202 as a recipient of the message. In response to receiving a message, the messaging application 120 can identify the agent 130 as a recipient of the message based on whether the agent 130 has subscribed to receive messages for the message group 202 and/or has subscribed to receive messages containing content having a particular type of data and delivers the message to the agent 130.

While not shown, in various embodiments, the node 110 executing the messaging application 120 can execute a plurality of agents 130. Each agent 130 can be associated with a different set of permissions. For example (without limitation), each agent 130 can be associated with a respective policy file 216 that indicates the permissions of the agent 130 to join one or more message groups 202, send messages 150 to various message groups 202, or the like.

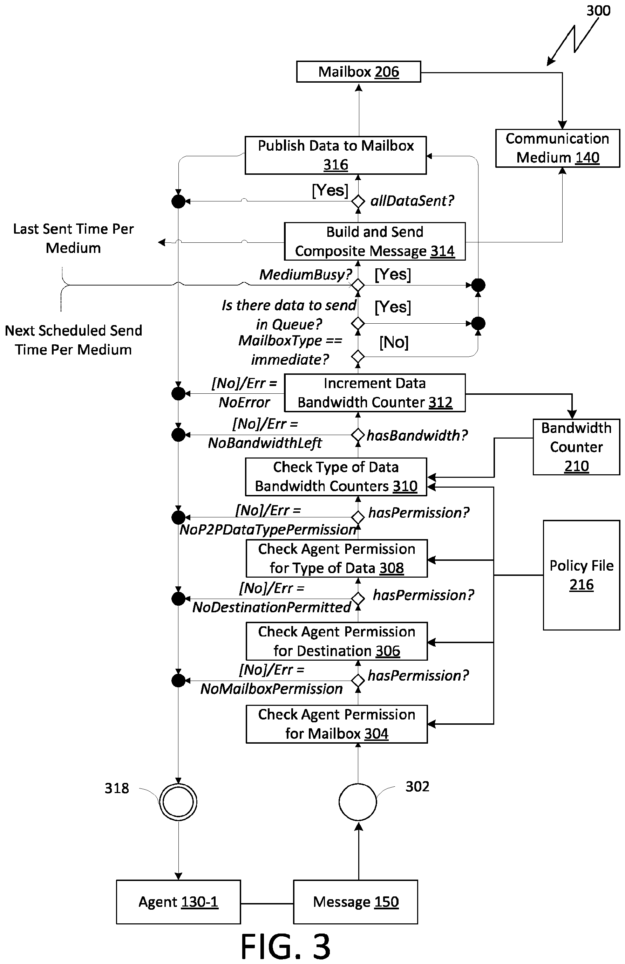

Figure 3 illustrates an example of messaging using the messaging application 120 of Figure 2, according to various embodiments. The message queuing and sending process 300 can be performed, for example, by messaging application 120-1 executing on node 110-1 of Figure 1 and/or messaging application 120 of Figure 2. And although Figure 3 is described as being performed by messaging application 120-1 of Figure 1 and receiving messages from agent 130-1 of Figure 1, any other technically feasible messaging application capable of performing the described operations and any other technically feasible agent can be used.

As shown, the message queuing and sending process 300 begins at step 302 in which messaging application 120-1 receives content for a message 150 from agent 130-1. The content for the message 150 includes, without limitation, an identifier that indicates an identity of the agent 130-1, a data packet including data of a particular type of data, and an identifier of a mailbox 206 to which agent 130-1 requests the message 150 to be delivered. Agent 130-1 is associated with a policy file 216 that indicates whether agent 130-1 is permitted to send message 150 to the mailbox 206.

At step 304, messaging application 120-1 checks the policy file 216 to determine whether agent 130-1 is permitted to deliver messages 150 via the mailbox 206. For example, the policy file 216 can indicate that only certain agents 130 are permitted to deliver messages via the mailbox 206. If messaging application 120-1 determines that the policy file 216 does not permit agent 130-1 to deliver messages 150 via the mailbox 206, messaging application 120-1 proceeds to step 318 to conclude the message queuing and sending process 300 with a response indicating that agent 130-1 is not permitted to deliver messages 150 via the mailbox 206. If messaging application 120-1 determines that the policy file 216 permits agent 130-1 to deliver messages 150 via the mailbox 206, messaging application 120-1 proceeds to step 306.

At step 306, messaging application 120-1 checks the policy file 216 to determine whether agent 130-1 is permitted to deliver messages 150 to a destination of the mailbox 206. In various embodiments, the destination of the mailbox 206 includes a message group 202 including one or more other agents 130 executing on node 110-1 or on other nodes 110 of the mesh network. In various embodiments, the destination of the mailbox 206 includes a recipient that is associated with the mailbox 206, such as a particular agent 130 executing on a particular node of the mesh network. In various embodiments, the destination of the mailbox 206 includes an endpoint that is associated with the mailbox 206, such as an address of a computing system within or outside the mesh network to which the mailbox 206 transmits the message 150. If messaging application 120-1 determines that the policy file 216 does not permit agent 130-1 to deliver messages 150 to the destination associated with the mailbox 206, messaging application 120-1 proceeds to step 318 to conclude the message queuing and sending process 300 with a response indicating that agent 130-1 is not permitted to deliver messages 150 to the destination associated with the mailbox 206. If messaging application 120-1 determines that the policy file 216 permits agent 130-1 to deliver messages 150 to the destination associated with the mailbox 206, messaging application 120-1 proceeds to step 308.

At step 308, messaging application 120-1 checks the policy file 216 to determine whether agent 130-1 is permitted to deliver messages 150 that include data of the particular type of data that is included in the message 150. If messaging application 120-1 determines that the policy file 216 does not permit agent 130-1 to deliver messages 150 including the particular type of data in the message to the message group 202, messaging application 120-1 proceeds to step 318 to conclude the message queuing and sending process 300 with a response indicating that agent 130-1 is not permitted to deliver messages 150 including the particular type of data in the message. If messaging application 120-1 determines that the policy file 216 permits agent 130-1 to deliver messages 150 including the particular type of data in the message, messaging application 120-1 proceeds to step 310.

At step 310, messaging application 120-1 checks the policy file 216 to determine whether agent 130-1 is limited to a maximum amount of data that agent 130-1 can transmit to the message group. In various embodiments, the policy file 216 indicates the limit of transmitted data as a maximum amount of data to that agent 130-1 is permitted to deliver over a lifetime of agent 130-1, or during a particular time period, such as per minute, hour, day, or month. Messaging application 120-1 also checks a bandwidth counter 210 to determine a volume of data that agent 130-1 has previously sent (e.g., during a lifetime of agent 130-1 or during a current time period, such as a current minute, hour, day, or month). In various embodiments, if messaging application 120-1 determines that a next instance of a time period associated with the bandwidth counter 210 has started, messaging application 120-1 resets the bandwidth counter 210 to zero before checking the volume of data stored by the bandwidth counter 210. Messaging application 120-1 also checks a size of the message 150 to determine whether the size of the message 150 added to the volume of data indicated by the bandwidth counter 210 would exceed the limit of transmitted data indicated by the policy file 216. If messaging application 120-1 determines that the size of the message 150 added to the volume of data indicated by the bandwidth counter 210 would exceed the limit of transmitted data indicated by the policy file 216, messaging application 120-1 proceeds to step 318 to conclude the message queuing and sending process 300 with a response indicating that sending the message would exceed the limit of transmitted data. If messaging application 120-1 determines that would exceed the limit of transmitted data indicated by the policy file 216, messaging application 120-1 proceeds to step 312.

At step 312, messaging application 120-1 increments the bandwidth counter 210. For example, messaging application 120-1 can add the size of the message 150 to the volume of data currently stored by the bandwidth counter 210.

Also at step 312, messaging application 120-1 determines whether to send the message 150 immediately or to enqueue the message. First, messaging application 120-1 determines whether the message 150 is associated with an immediate delivery mode. In various embodiments, the message 150 indicates an immediate delivery mode or a scheduled delivery mode. Alternatively or additionally, in various embodiments, a mailbox 206 associated with the message 150 indicates an immediate delivery mode or a scheduled delivery mode. If messaging application 120-1 determines that the message 150 is not associated with an immediate delivery mode, messaging application 120-1 proceeds to step 316 to enqueue the message 150. If messaging application 120-1 determines that the message 150 is associated with an immediate delivery mode, messaging application 120-1 next determines whether the mailbox 206 currently stores enqueued data. If messaging application 120-1 determines that the mailbox 206 currently stores enqueued data, messaging application 120-1 proceeds to step 316 to enqueue the message 150. If messaging application 120-1 determines that the mailbox 206 does not currently store enqueued data, messaging application 120-1 next determines whether a communication medium 140 associated with the mailbox 206 is busy. If messaging application 120-1 determines that the communication medium 140 associated with the mailbox 206 is busy, messaging application 120-1 proceeds to step 316 to enqueue the message 150. If messaging application 120-1 determines that the communication medium 140 associated with the mailbox 206 is not busy, messaging application 120-1 proceeds to step 314 to transmit the message 150.

At step 314, messaging application 120-1 builds and sends a composite message that includes at least a portion of the message 150. In various embodiments, the composite message is formatted based on a communication medium 140 associated with the mailbox 206. For example (without limitation), the composite message can be formatted according to a wire protocol of a communication medium 140 that is associated with the mailbox 206 (e.g., a TCP packet or a UDP packet that can be transmitted by a TCP/IP communication medium 140, or a data frame that can be transmitted by a Bluetooth^{®} communication medium 140). At step 314, messaging application 120-1 transmits or sends the composite message via the communication medium 140 (e.g., by storing the message in an outbound message buffer of a communication interface, such as an Ethernet adapter, a WiFi^{®} adapter, or a Bluetooth^{®} adapter).

Also at step 314, messaging application 120-1 also determines whether all of the data of the message 150 is being immediately sent by the communication medium 140. For example, in some messages 150, the communication medium 140 is associated with a limit of data that can be included in a composite message, such as a limit of data that can be included in one or more TCP packets, one or more UDP packets, or one or more data frames. If messaging application 120-1 determines that a volume of data included in the composite message does not exceed a limit of data associated with the communication medium 140, messaging application 120-1 proceeds to step 318 to conclude the message queuing and sending process 300 with a response indicating that the message 150 has been delivered or will be delivered. If messaging application 120-1 determines that a volume of data included in the composite message exceeds a limit of data associated with the communication medium 140, messaging application 120-1 immediately sends a first portion of the message 150 in the packet and proceeds to step 316 with a remainder of the data in the message 150.

In various embodiments and as shown, a message can be associated with a time period with which messages 150 are sent to other nodes of the mesh network. For example, a message 150 can indicate that the message is to be sent at the start of a next instance of the time period, such as sending one message at the start of a next minute, hour, day, or month. Messaging application 120-1 can determine a next scheduled date and/or time for sending messages 150 based on a last date and/or time of a transmission of a previous message. If the message 150 is associated with a time period, messaging application 120-1 can store a Last Sent Time Per Medium value (e.g., a last date and/or time that the message 150 was sent using the communication medium 140) and/or a Next Scheduled Send Time Per Medium value (e.g., a next scheduled date and/or time at which the communication medium 140 transmits messages 150). In various embodiments and as shown, messaging application 120-1 stores a last date and/or time or a next scheduled date and/or time for each communication medium 140 of a plurality of communication media 140. If the last sent time is less than one time period (e.g., the last time sent was 30 minutes ago, and the time period is one hour), messaging application 120-1 can delay further processing until the duration since the last date and/or time is longer than the time period. Alternatively, if the next scheduled date and/or time has not yet occurred, messaging application 120-1 can delay further processing until at least the next scheduled date and/or time.

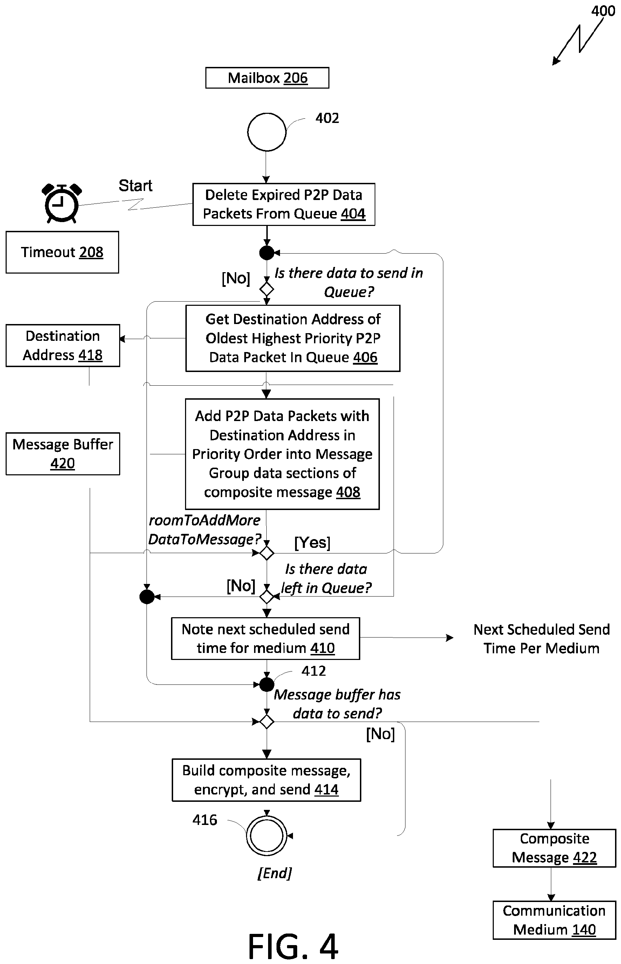

At step 316, messaging application 120-1 publishes at least a portion of the message 150 to the mailbox 206. In various embodiments and as shown, messaging application 120-1 enqueues, in a queue of the mailbox 206, one or more P2P data packets that can be individually sent via the communication medium 140 and that, together, comprise the message 150. Publishing at least a portion of the message 150 to the mailbox 206 causes the mailbox 206 to enqueue the at least a portion of the message 150 for future delivery. At a future time, messaging application 120-1 can perform a message unqueuing process as shown in Figure 4 and as described below. Messaging application 120-1 then proceeds to step 318 to conclude the message queuing and sending process 300 with a response indicating that the message 150 has been delivered or will be delivered.

While not shown, in various embodiments, messaging application 120-1 can enqueue one or more messages 150 (e.g., one or more P2P data packets) in the mailbox 206 with an expiration condition. For example, the one or more messages 150 can indicate an expiration date and/or time, that is, a date and/or time by which the message 150 is to be deleted if it has not yet been transmitted. The message 150 can indicate a specific expiration date and/or time. Alternatively or additionally, the message 150 can indicate a duration within which the message 150 can be sent, where the duration is measured from a date and/or time at which the message 150 was enqueued in the mailbox 206. Based on the duration, messaging application 120-1 can determine the expiration date and/or time of the message 150.

At step 318, messaging application 120-1 concludes the message queuing and sending process 300. In various embodiments, messaging application 120-1 provides a response to agent 130-1 to indicate an outcome of the message queuing and sending process 300, such as an indication that the message 150 has been delivered or will be delivered, or a reason that the message 150 cannot or will not be delivered.

Figure 4 illustrates a message unqueuing process 400 of messaging application 120-1 of Figure 2, according to various embodiments. The message unqueuing and sending process 400 can be performed, for example, by messaging application 120-1 of Figure 1. And although Figure 4 is described as being performed by messaging application 120-1 of Figure 1, any other technically feasible messaging application capable of performing the described operations can be used. The message unqueuing and sending process 400 involves a queue stored by a mailbox 206 that is associated with a communication medium 140 and a message buffer 420 that stores message group data.

As shown, the message unqueuing process 400 begins at step 402. In various embodiments, the message unqueuing process 400 begins at step 402 when a previously unqueued message is transmitted on a communication medium 140 or when a communication medium 140 that was previously busy becomes free. Alternatively or additionally, in various embodiments, the message unqueuing process 400 begins at step 402 when a timeout 208 of a time period has elapsed.

At step 404, messaging application 120-1 deletes any expired P2P data packets from the queue included in the mailbox 206. For example, in various embodiments, one or more messages 150 enqueued in the mailbox 206 are associated with an expiration condition (e.g., an expiration date and/or time which the message 150 is to be deleted if the message 150 has not yet been transmitted). Based on the expiration condition, messaging application 120-1 determines whether any messages 150 in the mailbox 206 have expired, and if so, messaging application 120-1 deletes the expired messages.

Also at step 404, messaging application 120-1 determines whether the queue of the mailbox 206 includes any queued messages 150. If the queue of the mailbox 206 does not include any queued messages 150, messaging application 120-1 proceeds to step 412 to determine whether a message buffer has any data to be sent. If the queue of the mailbox 206 includes one or more queued messages 150, messaging application 120-1 proceeds to step 406.

At step 406, messaging application 120-1 determines a destination address 418 of a message 150 stored in the queue of the mailbox 206 that has an oldest and/or highest priority. For example, between a first message 150 having a high priority and an age and a second message 150 having a low priority and the same or similar age, messaging application 120-1 selects the first message 150. As another example, between a first message 150 having a priority and an old age and a second message 150 having the same or similar priority and a young age, messaging application 120-1 selects the first message 150. Based on a review of the messages 150 stored in the queue of the mailbox 206, messaging application 120-1 determines the destination address 418 of one of the queued messages 150.

At step 408, messaging application 120-1 unqueues one or more messages 150 stored in the queue of the mailbox 206. In various embodiments and as shown, messaging application 120-1 unqueues one or more enqueued P2P data packets that are associated with the destination address 418. In various embodiments and as shown, messaging application 120-1 unqueues one or more P2P data packets stored in the queue of the mailbox 206. Alternatively or additionally, in various embodiments, messaging application 120-1 unqueues one or more messages 150 and/or one or more P2P data packets based on a priority order. For example, between a first P2P data packet associated with the destination address 418 and having a high priority and a second P2P data packet associated with the destination address 418 having a low priority, messaging application 120-1 selects the first P2P data packet. As shown, messaging application 120-1 adds the unqueued one or more P2P data packets to the message buffer. Specifically, messaging application 120-1 adds the unqueued one or more P2P data packets to a data section of the message buffer 420 that is associated with the destination address 418.

Also at step 408, messaging application 120-1 determines whether the message buffer 420 has room to add more data, such as one or more additional messages 150 and/or one or more additional P2P data packets. In various embodiments, the message buffer 420 is associated with a size limit, such as a maximum size of a message that can be transmitted by the communication medium 140. If messaging application 120-1 determines that the message buffer 420 has room to add more data, messaging application 120-1 returns to step 406 to unqueue one or more additional messages 150 and/or one or more additional P2P data packets. If messaging application 120-1 determines that the message buffer 420 does not have room to add more data, messaging application 120-1 proceeds to step 410.

In various embodiments and as shown, after unqueuing the messages 150 and/or P2P data packets from the queue of the mailbox 206 at step 408, messaging application 120-1 determines whether any data (e.g., additional messages 150 and/or P2P data packets) are left in the queue of the mailbox 206. If messaging application 120-1 determines that data is left in the queue of the mailbox 206, messaging application 120-1 records a next scheduled date and/or time for the communication medium 140. Messaging application 120-1 can use the recorded next scheduled date and/or time as part of step 312 of Figure 3.

At step 410, messaging application 120-1 determines whether the message buffer 420 has any data to be sent. That is, messaging application 120-1 determines whether the step 408 of unqueuing messages 150 and/or P2P data packets resulted in one or more messages 150 and/or P2P data packets being added to the message buffer 420. If messaging application 120-1 determines that the message buffer 420 does not have any data to be sent, messaging application 120-1 proceeds to step 416 to conclude the message unqueuing process 400. If messaging application 120-1 determines that the message buffer 420 has data to be sent (e.g., one or more messages 150 and/or one or more P2P data packets), messaging application 120-1 proceeds to step 414.

At step 414, messaging application 120-1 builds a composite message 422 to be transmitted by the communication medium 140. For example, the composite message 422 can generate a TCP/IP message including one or more TCP data packets and a TCP header that includes transmission control fields (e.g., a source port, a destination port, a checksum, or the like). In various embodiments and as shown, messaging application 120-1 encrypts at least a portion of the composite message 422 with a cryptographic key. If a portion of the composite message 422 is for a message group 202, messaging application 120-1 can encrypt the portion of the composite message 422 with a cryptographic key that is associated with the message group 202. For example, if the composite message 422 includes a message group data section that is associated with a message group 202 (e.g., a set of one or more messages that are to be delivered to a message group 202), messaging application 120-1 can encrypt the message group data section 508 with a cryptographic key that is associated with the message group 202. If the composite message 422 includes two or more message group data sections, messaging application 120-1 can encrypt each message group data section with a different cryptographic key, where each cryptographic key is associated with the same message group 202 as the message group data section. Alternatively or additionally, if a message group data section of the composite message 422 is not associated with a message group 202, messaging application 120-1 can encrypt the message group data section with a default cryptographic key. Messaging application 120-1 transmits the composite message 422 via the communication medium 140 (e.g., by storing the composite message 422 in an output buffer of a network adapter). After generating, buffering, and/or transmitting the composite message 422, messaging application 120-1 can clear the message buffer 420. Messaging application 120-1 then proceeds to step 416 to conclude the message unqueuing process 400.

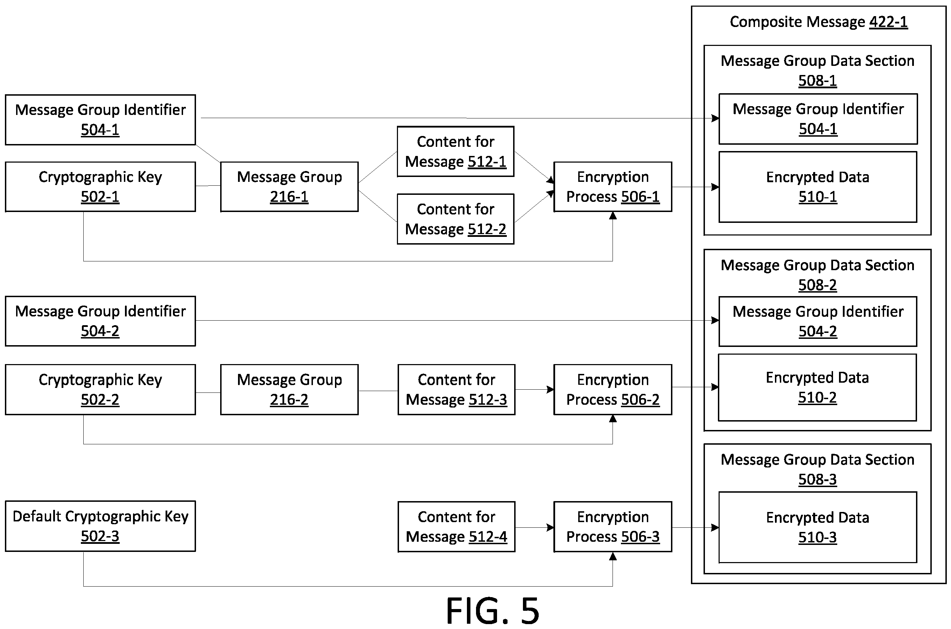

Figure 5 illustrates an example composite message 422-1 generated by the message unqueuing process 400 of Figure 4, according to various embodiments. The composite message 422-1 can be generated, for example, by messaging application 120-1 of Figure 1. And although Figure 5 is described as being performed by messaging application 120-1 of Figure 1, any other technically feasible messaging application capable of performing the described operations can be used.

Messaging application 120-1 receives content for a set of messages. Content for a first message 512-1 and content for a second message 512-2 are associated with a first message group 216-1 and can be delivered only to agents 130 that are included in the first message group 216-1 and/or are subscribed to receive messages having a same particular type of data as type of data in the content of the second message 512-2. Content for a third message 512-3 is for a second message group 216-2 and can be delivered only to agents 130 that are included in the second message group 216-2 and/or are subscribed to receive messages having a same particular type of data as the type of data in the content for the third message 512-3. Content for a fourth message 512-4 is not for any message group 202 and can be delivered to any agents 130 that are subscribed to receive messages having a same particular type of data as the type of data in the content in the fourth messages 512-4. The first message group 216-1 is associated with a first cryptographic key 502-1 and a first message group identifier 504-1. The second message group 216-2 is associated with a second cryptographic key 502-2 and a second message group identifier 504-2. A default cryptographic key 502-3 is not associated with either of the message groups 216-1, 216-2.

In order to generate the composite message 422-1, messaging application 120-1 generates a first message group data section 508-1 for the content for the first message 512-1 and the content for the second message 512-2 that are for the first message group 216-1. Messaging application 120-1 performs a first encryption process 506-1 that encrypts the content for the first message 512-1 and the content for the second message 512-2 with the first cryptographic key 502-1 to generate first encrypted data 510-1. Messaging application 120-1 stores, in the first message group data section 508-1, the first message group identifier 504-1 that identifies the first message group 216-1 and the first encrypted data 510-1.

Messaging application 120-1 generates a second message group data section 508-2 for the content for the third message 512-3 that is for the second message group 216-2. Messaging application 120-1 performs a second encryption process 506-2 that encrypts the content for the third message 512-3 with the second cryptographic key 502-2 to generate second encrypted data 510-2. Messaging application 120-1 stores, in the second message group data section 508-2, the second message group identifier 504-2 that identifies the second message group 216-2 and the second encrypted data 510-2.

Messaging application 120-1 generates a third message group data section 508-3 for the content for the fourth message 512-4 that is not for either of the message groups 202. Messaging application 120-1 performs a third encryption process 506-3 that encrypts the content for the fourth message 512-4 with the default cryptographic key 502-3 to generate third encrypted data 510-3. Messaging application 120-1 stores, in the third message group data section 508-3, the third encrypted data 510-3. The third message group data section 508-3 omits a message group identifier 504-2 to indicate that the content for the fourth message 512-4 included in the encrypted data 510-3 is not associated with any message group 202.

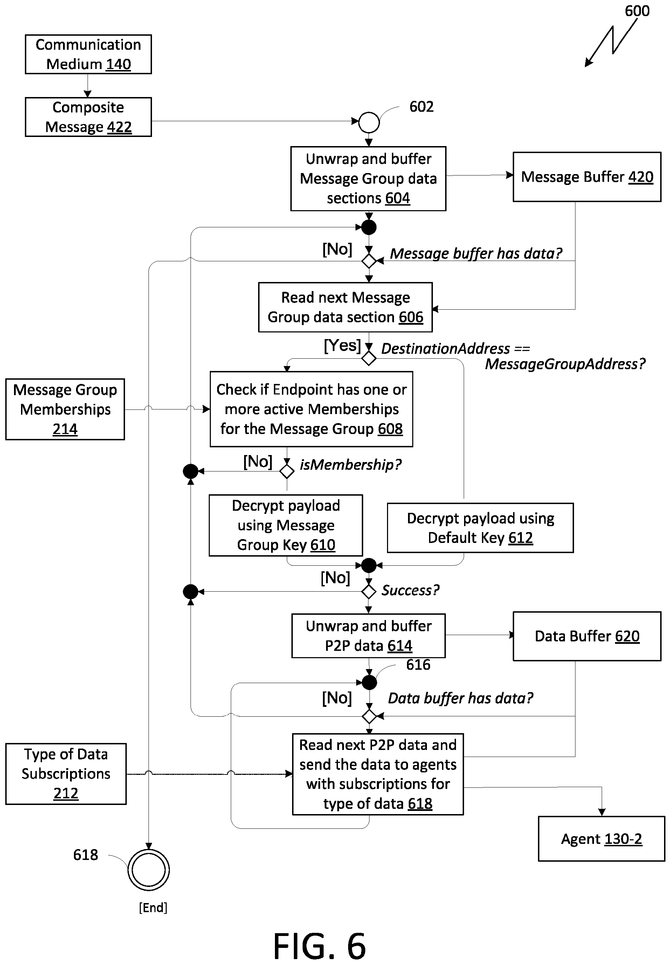

Figure 6 illustrates a message delivering process 600 of messaging application 120-2 of Figure 1, according to various embodiments. The message delivering process 600 can be performed, for example, by messaging application 120-2 of Figure 1. And although Figure 6 is described as being performed by messaging application 120-2 and agent 130-2 of Figure 1, any other technically feasible messaging application capable of performing the described operations and any technically feasible agent can be used.

The message delivering process 600 involves a message buffer 420, a set of type of data subscriptions 212, a set of message group memberships 214, and a data buffer 620. The message 150 is delivered to agent 130-2. And although Figure 6 is described using agent 130-2 of Figure 1, any other technically feasible agent capable of performing the described operations can be used.

As shown, the message delivering process 600 begins at step 602 in which communication medium 140 receives a composite message 422. The composite message 422 can be or can include the message transmitted built at step 414 and transmitted by the communication medium 140 of Figure 4.

At step 604, messaging application 120-2 unwraps the composite message 422. For example, messaging application 120-2 can extract one or more P2P data packets from the composite message 422, such as extracting one or more TCP packets from a TCP message. Messaging application 120-2 can also determine a number of message group data sections 508 in the composite message 422. Messaging application 120-2 stores one or more message group data sections 508 in the unwrapped composite message 422 in the message buffer 420.

Also at step 604, after unwrapping the composite message 422 and buffering the message group data sections 508, messaging application 120-2 determines whether the message buffer 420 has any data. If messaging application 120-2 determines whether the message buffer 420 does not have any data, messaging application 120-2 proceeds to step 618 to conclude the message delivering process 600. If messaging application 120-2 determines whether the message buffer 420 has data, messaging application 120-2 proceeds to step 606.

At step 606, messaging application 120-2 reads a message group data section 508 from the message buffer 420. In various embodiments, the message group data section 508 is associated with a message group 202, and the message group data section 508 includes one or more messages 150 to be delivered to one or more agents 130 that are included in the message group 202. In various embodiments, messaging application 120-2 reads message group data sections 508 from the message buffer 420 in series (e.g., according to an order in which the message group data sections 508 occurred in the unwrapped composite message 422 and/or an order in which the message group data sections 508 were stored in the message buffer 420).

Also at step 606, messaging application 120-2 determines whether a destination address associated with a message group data section 508 is associated with a message group 202. For example, the message group data section 508 can be empty or null, indicating delivery to any agents 130, or can include an identifier of a message group 202 to which delivery of the message 150 is permitted. If messaging application 120-2 determines that a destination address of the message group data section 508 is associated with a message group 202, messaging application 120-2 proceeds to step 608. If messaging application 120-2 determines that a destination address of the message group data section 508 is not associated with a message group 202, messaging application 120-2 proceeds to step 612.

At step 608, messaging application 120-2 checks if the endpoint (e.g., node 110-2 executing messaging application 120-2) is executing one or more agents 130 that are included in the message group 202. In various embodiments and as shown, messaging application 120-2 examines the set of message group memberships 214 to identify one or more agents 130 that are included in the message group 202. If messaging application 120-2 determines that the endpoint (e.g., node 110-2 executing messaging application 120-2) is not executing any agents 130 that are included in the message group 202, then the messages of the message group data section 508 cannot be delivered to any agents 130. Messaging application 120-2 discards the message group data section 508 and returns to step 604 to process a next message group data section 508 of the message buffer 420. If messaging application 120-2 determines that the endpoint (e.g., node 110-2 executing messaging application 120-2) is executing an agent that is included in the message group 202, such as agent 130-2, messaging application 120-2 proceeds to step 610.

At step 610, messaging application 120-2 decrypts the message group data section 508 using a cryptographic key 502 that is associated with the message group 202. If the decryption of the message group data section 508 fails, messaging application 120-2 discards the message group data section 508 and returns to step 604 to process a next message group data section 508 of the message buffer 420. If the decryption of the message group data section 508 succeeds, messaging application 120-2 proceeds to step 614.

At step 612, messaging application 120-2 decrypts the message group data section 508 using a default cryptographic key 502-3 that is not associated with any message group 202. That is, if the message group data section 508 is not associated with a particular message group 202, messaging application 120-2 uses a default cryptographic key 502-3 to decrypt the message group data section 508. If the decryption of the message group data section 508 fails, messaging application 120-2 discards the message group data section 508 and returns to step 604 to process a next message group data section 508 of the message buffer 420. If the decryption of the message group data section 508 succeeds, messaging application 120-2 proceeds to step 614.

At step 614, messaging application 120-2 unwraps and buffers the P2P data. For example, messaging application 120-2 can extract one or more messages 150 from the decrypted message group data section 508. Messaging application 120-2 stores each message 150 in the data buffer 620.

At step 616, messaging application 120-2 determines whether the data buffer 620 has any data (e.g., whether one or more messages 150 are stored in the data buffer 620). If messaging application 120-2 determine that the data buffer 620 does not have any data, messaging application 120-2 returns to step 604 to process a next message group data section 508 of the message buffer 420. If messaging application 120-2 determines that the data buffer 620 has data (e.g., that at least one message 150 is stored in the data buffer 620), messaging application 120-2 proceeds to step 618.

At step 618, messaging application 120-2 reads a message 150 from the data buffer 620. In various embodiments, messaging application 120-2 reads messages 150 from the data buffer 620 according to a priority of the messages 150. For example, between a first message 150 associated with a high priority and a second message 150 associated with a low priority, messaging application 120-2 can process the first message 150 before the second message 150. Alternatively or additionally, in various embodiments, messaging application 120-2 reads messages 150 from the data buffer 620 in series (e.g., according to an order in which the messages 150 occurred in the message group data section 508 and/or an order in which the message group data sections 508 were stored in the data buffer 620). Messaging application 120-2 delivers content from each message 150 to agent 130-2. In various embodiments, for each message 150 included in a message group data section 508 that is associated with a message group 202, messaging application 120-2 delivers content from each message 150 to agent 130-2 because agent 130-2 is included in (e.g., subscribed to) the message group 202. Alternatively or additionally, in various embodiments (not shown), for each message 150 that includes data of a particular type of data, messaging application 120-2 delivers content from each message 150 to one or more agents 130 that are subscribed to receive messages 150 that include data of the particular type of data, as indicated by the set of type of data subscriptions 212. After delivering the content from one or more messages 150 of the message group data section 508 to agent 130-2 and/or any other agents 130 that are associated with the messages 150, messaging application 120-2 returns to step 616 to deliver any additional messages 150 in the data buffer 620.

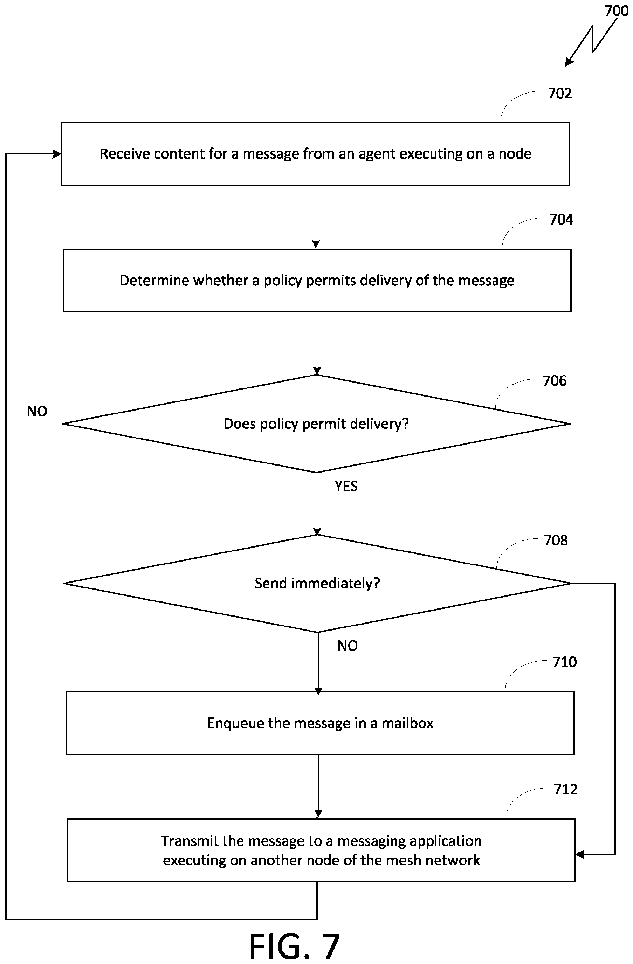

Figure 7 is a flow diagram of method steps for transmitting a message by a messaging application, according to various embodiments. The method steps of Figure 7 can be performed, for example, by messaging application 120-1 of Figure 1. At least some of the method steps of Figure 7 can be performed, for example, during the message queuing and sending process 300 of Figure 3 and/or the message unqueuing process 400 of Figure 4.

As shown, a method 700 begins at step 702 in which the messaging application receives content for a message from an agent executing on the node. In various embodiments, the message is for a message group. In various embodiments, the message includes data of a particular type of data.

At step 704, the messaging application determines whether a policy permits delivery of the message. In various embodiments, the policy includes one or more rules that restrict the delivery of messages to the mesh network. Each rule indicates a permission that is granted upon fulfillment of one or more criteria. In various embodiments, the policy includes a rule indicating one or more agents that are permitted to send messages (e.g., an identity or identifier of each agent that is permitted to send messages). In various embodiments, step 704 includes step 304 of Figure 3, in which the messaging application checks a policy file to determine whether the agent is permitted to deliver messages 150 via the mailbox 206. In various embodiments, the policy includes a rule indicating whether messages that include a particular type of data can be delivered. In various embodiments, step 704 includes step 308 of Figure 3, in which the messaging application checks a policy file to determine whether the agent is permitted to deliver messages that include data of the particular type of data that is included in the message. In various embodiments, the policy includes a rule indicating whether messages that can be delivered to a recipient (e.g., a member of the message group with which the message is associated). In various embodiments, the policy includes a rule indicating a limit of transmitted data that is associated with one or more agents (e.g., a data transmission quota that is applied to the agent that sent the message). In various embodiments, step 704 includes step 310 of Figure 3, in which the messaging application checks a policy file to determine whether the agent is limited to a maximum amount of data that agent can transmit to the message group. In various embodiments, the policy includes a rule indicating a limit of transmitted data that is associated with a type of data that is included in the message (e.g., a data transmission quota that is applied to a type of data that is included in the message). If, at step 706, the messaging application determines that the policy does not permit delivery of the message, the method returns to step 702 to receive additional messages. If, at step 706, the messaging application determines that the policy permits delivery of the message, the method continues to step 708.

At step 708, the messaging application determines whether the message is to be sent immediately. In various embodiments, the messaging application determines whether the message indicates an immediate delivery mode or a scheduled delivery mode. In various embodiments, the messaging application determines whether the mailbox associated with the message indicates an immediate delivery mode or a scheduled delivery mode. If the messaging application determines that the message is not to be sent immediately, the method proceeds to step 710. If the messaging application determines that the message is to be sent immediately, the method proceeds to step 712.

At step 710, the messaging application enqueues the message in a mailbox. In various embodiments, step 710 includes step 316 of Figure 3, in which the messaging application enqueues the message in the mailbox. In various embodiments, the messaging application associates the message enqueued in the mailbox with a priority. In various embodiments, the messaging application associates the message enqueued in the mailbox with an expiration condition.

At step 712, the messaging application transmits the message to a messaging application executing on another node of the mesh network. In various embodiments, step 712 includes step 314 of Figure 3, in which the messaging application sends the message without enqueuing the message in a mailbox. In various embodiments, step 712 includes step 414 of Figure 4, in which the messaging application builds and sends a composite message based on one or more messages that are unqueued from a mailbox. In various embodiments, the messaging application transmits the message in a message group data section of a composite message. In various embodiments, the message and the message group data section are associated with a message group, and the message group data section includes another message that is also for the message group. In various embodiments, the message group data section is encrypted with a cryptographic key that is associated with the same message as the message group data section. In various embodiments, a first message group data section is encrypted with a first cryptographic key that is associated with a first message group, and a second message group data section is encrypted with a second cryptographic key that is associated with a second message group. In various embodiments, the message is not for any message group, and the message group data section is encrypted with a default cryptographic key. In various embodiments, the messaging application transmits the message immediately (e.g., based on an immediate delivery mode) or at a scheduled date or time (e.g., based on a scheduled delivery mode). The method returns to step 702 so that the messaging application and receive additional messages from the agent and transmit the messages to other nodes of the mesh network.

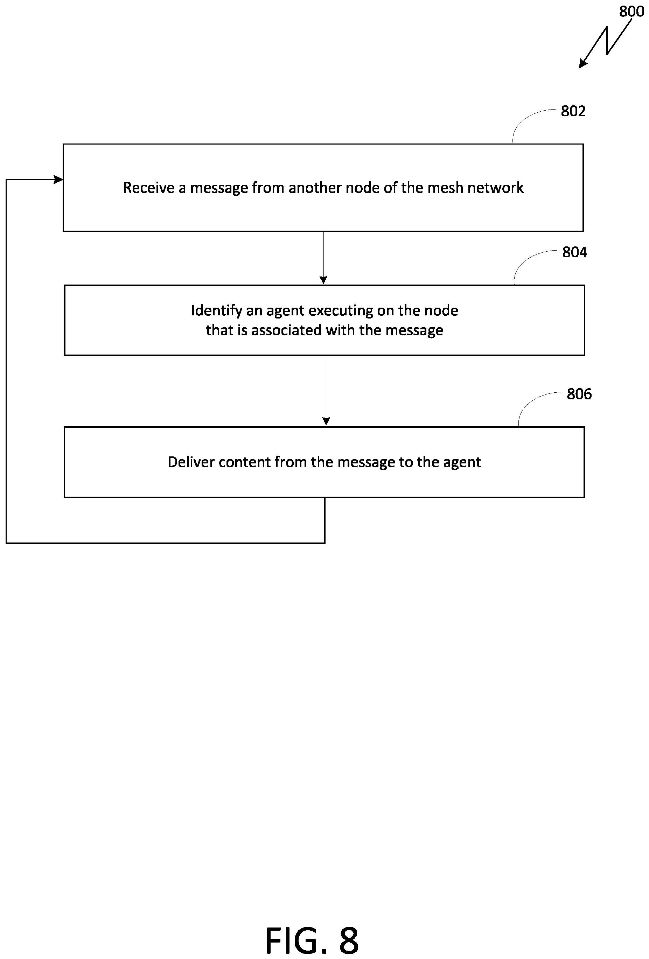

Figure 8 is a flow diagram of method steps for receiving a message by a messaging application, according to various embodiments. The method steps of Figure 8 can be performed, for example, by messaging application 120-2 of Figure 1. The method steps of Figure 8 can be performed, for example, during the message delivering process 600 of Figure 6.

As shown, a method 800 begins at step 802 in which the messaging application receives a message from an agent executing on the node. In various embodiments, the messaging application receives the message in a message group data section that is associated with a message group. In various embodiments, step 802 includes step 604 of Figure 6, in which the messaging application unwraps the composite message, and/or step 606 of Figure 6, in which the messaging application reads a next message group data section. In various embodiments, the message group data section is encrypted with a cryptographic key that is associated with the message group, and the message group data section decrypts the message group data section with the cryptographic key. In various embodiments, step 802 includes step 610 of Figure 6, in which the messaging application decrypts a message group data section using a cryptographic key that is associated with a message group. In various embodiments, the message group data section is encrypted with a default cryptographic key that is not associated with any message group, and the message group data section decrypts the message group data section with the default cryptographic key. In various embodiments, step 802 includes step 612 of Figure 6, in which the messaging application decrypts a message group data section using a default cryptographic key that is not associated with any message group.

At step 804, the messaging application identifies an agent executing on the node that is associated with the message. In various embodiments, the message is for a message group, and messaging application identifies the agent as being included in the message group based on a set of message group memberships. In various embodiments, the message includes data of a particular type of data, and messaging application identifies the agent as having subscribed to messages that include the particular type of data based on a set of type of data subscriptions.

At step 806, the messaging application delivers content from the message to the agent. In various embodiments, the messaging application stores the message in a message buffer or queue that is associated with the agent. In various embodiments, the messaging application stores the message in a message buffer or queue and then notifies the agent that the message has been received. In various embodiments, step 806 includes step 618 of Figure 6, in which the messaging application delivers content from a message to an agent. The method returns to step 802 so that the messaging application can receive and deliver additional messages.

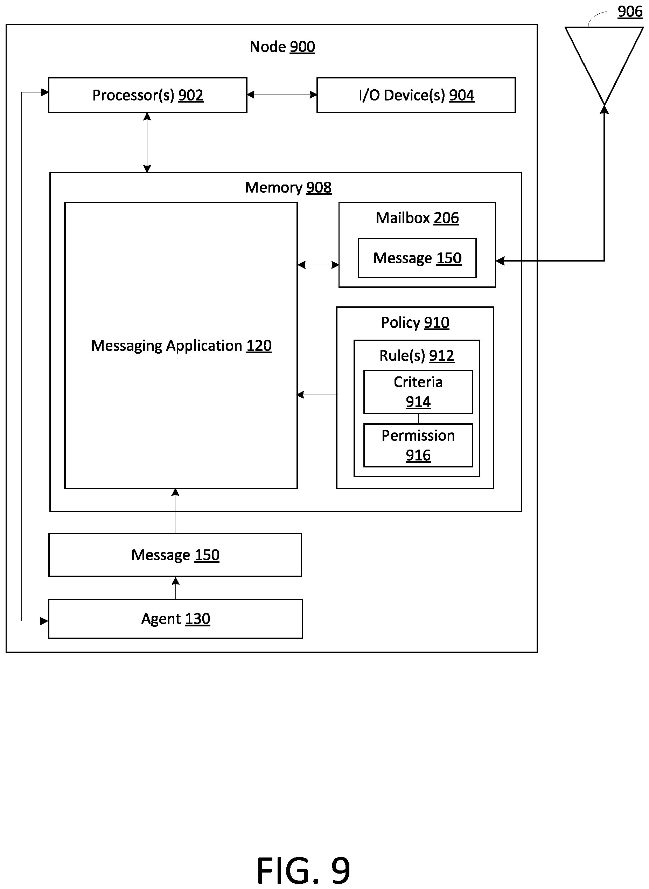

Figure 9 illustrates an exemplary node 900 that can be included in a mesh network and used to implement the techniques discussed above with respect to Figures 1-8. Node 900 includes, without limitation, one or more processors 902, one or more input/output (I/O) devices 904, one or more transceivers 906, and a memory 908.

The node 900 is a network device and includes computing device hardware configured to perform various processing operations and execute program code. The node can further include various analog-to-digital and digital-to-analog converters, digital signal processors (DSPs), harmonic oscillators, transceivers, and any other components generally associated with RF-based communication hardware. In various embodiments, the node 900 includes a battery (not shown) that supplies power to the various computing device hardware included in node 900.

The one or more processors 902 can include any hardware configured to process data and execute software applications. At least one of the one or more processors 902 can include a real-time clock (RTC) (not shown) according to which processor 902 maintains an estimate of the current time. At least one of the one or more processors 902 executes an agent 130.

The one or more I/O devices 904 include devices configured to receive input, devices configured to provide output, and devices configured to both receive input and provide output. In various embodiments, the one or more I/O devices include a keyboard, a mouse, a joystick, a touchpad, a touchscreen, a microphone, an inertial measurement unit (IMU), a display, a speaker, a haptic generator, or the like.

The one or more transceivers 906 can include one more interfaces that are associated with various communication media 140. In various embodiments, the one or more transceivers include at least one of an Ethernet interface, a power line communication interface, a WiFi^{®} interface, or a Bluetooth^{®} interface.

The memory 908 can be implemented by any technically feasible storage medium. Memory 908 includes, without limitation, a messaging application 120 and a mailbox 206. The messaging application 120 includes program code that, when executed by the one or more processors 902, performs any of the messaging processes functionality described herein. In various embodiments, the messaging application 120 is, or at least includes, messaging application 120-1 of Figure 1. In various embodiments, the messaging application 120 includes the message queuing and sending process 300 of Figure 3. In various embodiments, the messaging application 120 includes the message unqueuing process 400 of Figure 4. In various embodiments, the messaging application 120 performs the method 700 of Figure 7.

The memory 908 includes a policy 910 that includes one or more rules 912, wherein each rule indicates a permission 916 (e.g., an action) that is granted based on a fulfillment of one or more criteria one or more criteria 914. In various embodiments, the policy 910 is provided as one or more policy files 216, as shown in Figures 2 and 3. The memory 908 also includes a mailbox 206 that is configured to store messages 150 for transmission to other nodes of the mesh network. In various embodiments, the mailbox 206 is associated with a recipient (e.g., a message group 202) and/or a type of data included in the messages 150.

The agent 130 is executed by the one or more processors 902 of the node 900 to perform various operations. In various embodiments, the operations include monitoring, analyzing, collecting, storing, transmitting, and receiving data. In various embodiments, the agent 130 is stored in the memory 908 that also stores the messaging application 120.

The agent 130 sends, to the messaging application 120, content for a message 150 to be delivered to one or more other agents 130 of the mesh network. The messaging application 120 receives the content for the message from the agent 130 and determines, based on the policy 910, whether the agent 130 is permitted to deliver the message. If the messaging application 120 determines, based on the policy 910, that the agent 130 is permitted to deliver the message 150, the messaging application 120 can cause the message 150 to be transmitted. In various embodiments, the messaging application 120 can cause the message 150 to be transmitted immediately via the one or more transceivers 906, such as based on an immediate delivery mode. In various embodiments, the messaging application 120 can enqueue the message 150 in the mailbox 206 for future delivery by the one or more transceivers 906. In various embodiments, the messaging application 120 includes the message 150 in a composite message 422, such as the composite message 422 of Figures 4 and/or 5.

The messaging application 120 is also able to receive a message 150, via the one or more transceivers 906, that was transmitted by a messaging application 120 of another node of the mesh network on behalf of an agent 130 executing on the another node. In various embodiments, the message 150 is included in a composite message, such as the composite message 422 of Figure 5. The messaging application 120 determines that the agent 130 is associated with the message 150. The messaging application 120 delivers content from the message 150 to the agent 130.

### System Overview

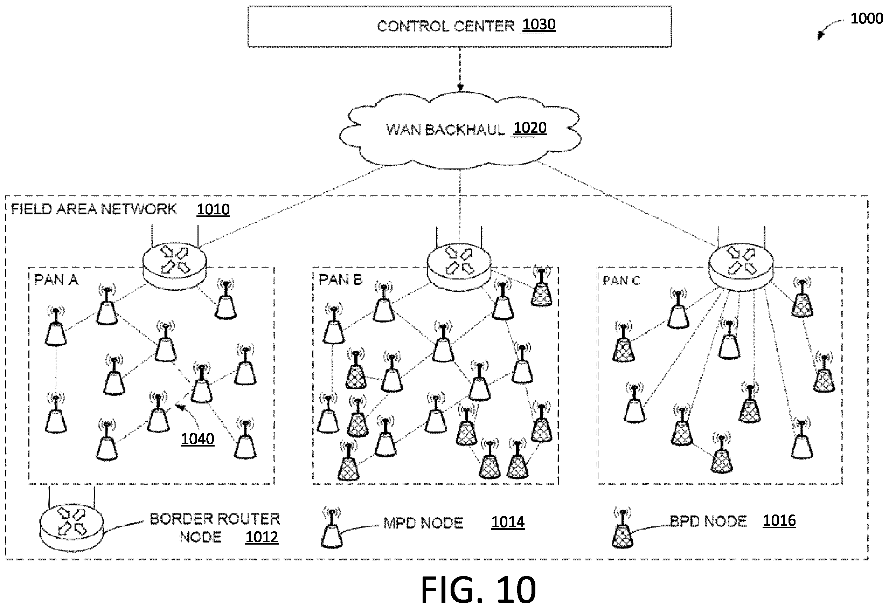

Figure 10 illustrates a network system configured to implement one or more aspects of the present embodiments. As shown, network system 1000 includes a field area network (FAN) 1010, a wide area network (WAN) backhaul 1020, and a control center 1030. FAN 1010 is coupled to control center 1030 via WAN backhaul 1020. Control center 1030 is configured to coordinate the operation of FAN 1010.

FAN 1010 includes personal area network (PANs) A, B, and C. PANs A and B are organized according to a mesh network topology, while PAN C is organized according to a star network topology. Each of PANs A, B, and C includes at least one border router node 1012 and one or more mains-powered device (MPD) nodes 1014. PANs B and C further include one or more battery-powered device (BPD) nodes 1016. Any of border router node 1012, the one or more MPD nodes 1014, or the BPD nodes 1016 can be used to implement the techniques discussed above with respect to Figures 1-9.

MPD nodes 1014 draw power from an external power source, such as mains electricity or a power grid. MPD nodes 1014 typically operate on a continuous basis without powering down for extended periods of time. BPD nodes 1016 draw power from an internal power source, such as a battery. BPD nodes 1016 typically operate intermittently and power down, go to very low power mode, for extended periods of time in order to conserve battery power.

MPD nodes 1014 and BPD nodes 1016 are coupled to, or included within, a utility distribution infrastructure (not shown) that distributes a resource to consumers. MPD nodes 1014 and BPD nodes 1016 gather sensor data related to the distribution of the resource, process the sensor data, and communicate processing results and other information to control center 1030. Border router nodes 1012 operate as access points to provide MPD nodes 1014 and BPD nodes 1016 with access to control center 1030.

Any of border router nodes 1012, MPD nodes 1014, and BPD nodes 1016 are configured to communicate directly with one or more adjacent nodes via bi-directional communication links, such as bi-directional communication link 1040. The communication links may be wired or wireless links, although in practice, adjacent nodes of a given PAN exchange data with one another by transmitting data packets via wireless radio frequency (RF) communications. The various node types are configured to perform a technique known in the art as "channel hopping" in order to periodically receive data packets on varying channels. As known in the art, a "channel" may correspond to a particular range of frequencies. In one embodiment, a node may compute a current receive channel by evaluating a Jenkins hash function based on a total number of channels and the media access control (MAC) address of the node.

Each node within a given PAN can implement a discovery protocol to identify one or more adjacent nodes or "neighbors." A node that has identified an adjacent, neighboring node can establish a bi-directional communication link with the neighboring node. Each neighboring node may update a respective neighbor table to include information concerning the other node, including the MAC address of the other node as well as a received signal strength indication (RSSI) of the communication link established with that node.

Nodes can compute the channel hopping sequences of adjacent nodes to facilitate the successful transmission of data packets to those nodes. In embodiments where nodes implement the Jenkins hash function, a node computes a current receive channel of an adjacent node using the total number of channels, the MAC address of the adjacent node, and a time slot number assigned to a current time slot of the adjacent node.

Any of the nodes discussed above may operate as a source node, an intermediate node, or a destination node for the transmission of data packets. A given source node can generate a data packet and then transmit the data packet to a destination node via any number of intermediate nodes (in mesh network topologies). The data packet can indicate a destination for the packet and/or a particular sequence of intermediate nodes to traverse in order to reach the destination node. In one embodiment, each intermediate node can include a forwarding database indicating various network routes and cost metrics associated with each route.

Nodes can transmit data packets across a given PAN and across WAN backhaul 1020 to control center 1030. Similarly, control center 1030 can transmit data packets across WAN backhaul 1020 and across any given PAN to a particular node included therein. As a general matter, numerous routes can exist which traverse any of PANs A, B, and C and include any number of intermediate nodes, thereby allowing any given node or other component within network system 1000 to communicate with any other node or component included therein.

Control center 1030 includes one or more server machines (not shown) configured to operate as sources for, or destinations of, data packets that traverse within network system 1000. The server machines can query nodes within network system 1000 to obtain various data, including raw or processed sensor data, power consumption data, node/network throughput data, status information, and so forth. The server machines can also transmit commands and/or program instructions to any node within network system 1000 to cause those nodes to perform various operations. In one embodiment, each server machine is a computing device configured to execute, via a processor, a messaging application stored in a memory to enable messaging among agents of the mesh network.

In sum, a messaging application executing on a node receives a message from an agent executing on the node, where the message is for a message group. The messaging application determines whether the agent is permitted to send the message to the message group based on a policy. Based on determining that the agent is permitted to send the message to the message group, the messaging application transmits the message to a messaging application of another node of the mesh network. Determining whether the agent is permitted to send the message to the message group based on the policy enables the messaging application to control the delivery of messages to other nodes of the mesh network.

At least one technical advantage of the disclosed techniques is that, with the disclosed techniques, nodes are able to manage the transmission and receiving of messages between agents on the nodes based on agent-specific, data-specific, and/or communication media-specific criteria. The disclosed techniques further allow nodes to regulate the bandwidth used by the agents for transmitting messages, which reduces the bandwidth used for messaging and supports the prioritization of bandwidth among the various messages. Additionally, the improved management of the messaging reduces the power consumed for transmitting, receiving, and processing messages.
1. According to some embodiments, a method comprises receiving, by a messaging application executing on a node of a mesh network, content for a message from an agent executing on the node; determining, by the messaging application, whether a policy permits delivery of the message; and in response to determining that the policy permits delivery of the message, transmitting, by the messaging application, the message to another messaging application executing on another node of the mesh network.
2. The method according to clause 1, wherein the policy restricts messages based on at least one of: an identity of the agent, a recipient associated with the message, or a limit of transmitted data received from the agent.
3. The method according to clause 1 or clause 2, wherein the policy restricts messages based on a type of data included in the message.
4. The method according to any of causes 1-3, wherein the policy restricts messages based on a limit of transmitted data that includes a type of data included in the message.
5. The method according to any of causes 1-4, wherein the policy restricts messages based on a type of communication medium.
6. The method according to any of causes 1-5, further comprising, in response to determining that the policy does not permit delivery of the message, refraining, by the messaging application, from transmitting the message to the another messaging application executing on the another node of the mesh network.
7. The method according to any of causes 1-6, wherein the message includes a type of data, and transmitting the message further comprises enqueuing the message in a mailbox that is associated with the type of data.
8. The method according to any of causes 1-7, wherein the message is for a message group, and transmitting the message further comprises enqueuing the message in a mailbox that is associated with the message group.
9. According to some embodiments, one or more non-transitory computer readable media storing instructions that, when executed by one or more processors of a node of a mesh network, cause the one or more processors to execute a messaging application performing operations comprising obtaining content for a message from an agent executing on the node; verifying whether a policy permits delivery of the message; and in response to determining that the policy permits delivery of the message, sending the message to a messaging application of another node of the mesh network.
10. The one or more computer readable media (e.g. non-transitory computer readable media) according to clause 9, wherein the policy restricts messages based on at least one of an identity of the agent, a type of data included in the message, a recipient associated with the message, a limit of transmitted data received from the agent, a limit of transmitted data that includes a type of data included in the message, or a type of communication medium.
11. The one or more computer readable media (e.g. non-transitory computer readable media) according to clause 9 or clause 10, wherein sending the message comprises sending the message to a recipient associated with the message, and the recipient includes at least one of a mailbox, a message group, or an endpoint.
12. The one or more computer readable media (e.g. non-transitory computer readable media) according to any of causes 9-11, wherein sending the message comprises sending the message based on a priority associated with the message.
13. The one or more computer readable media (e.g. non-transitory computer readable media) according to any of causes 9-12, wherein the operations further comprise deleting the message based on an expiration condition.
14. The one or more computer readable media (e.g. non-transitory computer readable media) according to any of causes 9-13, wherein sending the message comprises sending the message based on a scheduled date or time, wherein the scheduled date or time is based on a date or time of a transmission of a previous message.
15. The one or more computer readable media (e.g. non-transitory computer readable media) according to any of causes 9-14, wherein sending the message comprises sending the message at a scheduled date or time, wherein the scheduled date or time is based on a start of an instance of a time period.
16. According to some embodiments, a node in a mesh network comprises one or more processors and a memory storing instructions that, when executed by the one or more processors, cause the one or more processors to accept content for a message from an agent executing on the node; certify that a policy authorizes the message to be provided to one or more other agents; and in response to certifying that the policy authorizes the message to be provided to one or more other agents, forward the message to a messaging application executing on another node of the mesh network.
17. The node according to clause 16, wherein the policy restricts messages based on at least one of an identity of the agent, a type of data included in the message, a recipient associated with the message, a limit of transmitted data received from the agent, a limit of transmitted data that includes a type of data included in the message, or a type of communication medium.
18. The node according to clause 16 or clause 17, wherein sending the message comprises sending the message based on one of an immediate delivery mode or a scheduled delivery mode.
19. The node according to any of causes 16-18, wherein the instructions, when executed by the one or more processors, further cause the one or more processors to, in response to determining that the policy restricts the message from being provided to one or more other agents, reject the message.
20. The node according to any of causes 16-19, wherein the instructions, when executed by the one or more processors, further cause the one or more processors to enqueue the message in a mailbox at a first time and unqueue the message from the mailbox after the first time.

Any and all combinations of any of the claim elements recited in any of the claims and/or any elements described in this application, in any fashion, fall within the contemplated scope of the present disclosure.

The descriptions of the various embodiments have been presented for purposes of illustration, but are not intended to be exhaustive or limited to the embodiments disclosed. Many modifications and variations will be apparent to those of ordinary skill in the art without departing from the scope of the described embodiments.

Aspects of the present embodiments may be embodied as a system, method or computer program product. Accordingly, aspects of the present disclosure may take the form of an entirely hardware embodiment, an entirely software embodiment (including firmware, resident software, microcode, etc.) or an embodiment combining software and hardware aspects that may all generally be referred to herein as a "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A method comprising:
receiving, by a messaging application executing on a node of a mesh network, content for a message from an agent executing on the node;
determining, by the messaging application, whether a policy permits delivery of the message; and
in response to determining that the policy permits delivery of the message, transmitting, by the messaging application, the message to another messaging application executing on another node of the mesh network.

2. The method of claim 1, wherein the policy restricts messages based on at least one of:
an identity of the agent,
a recipient associated with the message, or
a limit of transmitted data received from the agent.

3. The method of claim 1 or 2, wherein the policy restricts messages based on a type of data included in the message.

4. The method of any one of claims 1-3, wherein the policy restricts messages based on a limit of transmitted data that includes a type of data included in the message.

5. The method of any one of claims 1-4, wherein the policy restricts messages based on a type of communication medium.

6. The method of any one of claims 1-5, further comprising, in response to determining that the policy does not permit delivery of the message, refraining, by the messaging application, from transmitting the message to the another messaging application executing on the another node of the mesh network.

7. The method of any one of claims 1-6, wherein the message includes a type of data, and transmitting the message further comprises enqueuing the message in a mailbox that is associated with the type of data.

8. The method of any one of claims 1-7, wherein the message is for a message group, and transmitting the message further comprises enqueuing the message in a mailbox that is associated with the message group.

9. The method of any one of claims 1-8, wherein transmitting the message comprises transmitting the message to a recipient associated with the message, and the recipient includes at least one of a mailbox, a message group, or an endpoint.

10. The method of any one of claims 1-9, wherein sending the message comprises sending the message based on a priority associated with the message.

11. The method of any one of claims 1-10, further comprising deleting, by the messaging application, the message based on an expiration condition.

12. The method of any one of claims 1-11, wherein transmitting the message comprises transmitting the message based on a scheduled date or time, wherein the scheduled date or time is based on a date or time of a transmission of a previous message.

13. The method of any one of claims 1-12, wherein transmitting the message comprises transmitting the message at a scheduled date or time, wherein the scheduled date or time is based on a start of an instance of a time period.

14. One or more computer readable media storing instructions that, when executed by one or more processors of a node of a mesh network, cause the one or more processors to execute a messaging application performing the method of any one of claims 1-13.

15. A node in a mesh network, the node comprising:
one or more processors; and
a memory storing instructions that, when executed by the one or more processors, cause the one or more processors to perform the method of any one of claims 1-13.
